# EUROPEAN PATENT APPLICATION

(11) **EP 4 765 555 A1**
(43) Date of publication of application: **24.06.2026**
(21) Application number: 24221704.0
(22) Date of filing: 19.12.2024
(51) Int. Cl.: H02J 7/00, H02J 50/20, H02J 50/40, H02J 50/80

(54) **WIRELESS POWER TRANSMISSION SYSTEM AND METHOD**

(71) Applicant: GE Vernova Technology GmbH, 5400 Baden (CH)
(72) Inventor: Venkatesan, Balaji, Padappai, Tamil Nadu (IN); Rayon, Jean-Luc, Aix-les-Bains, Savoie (FR)
(74) Representative: Rüger Abel Patentanwälte PartGmbB

(57) **Abstract**

The invention refers to a wireless power transmission system (10) and method. It comprises a power transmitter arrangement (11) and a power receiver arrangement (12). The power transmitter arrangement (11) is configured to transmit electromagnetic wave pulses (W) to the power receiver arrangement (12), where the electrical energy can be accumulated and/or stored. The power receiver arrangement (12) is configured to create a feedback signal (F) for controlling the amount of transmitted electrical energy and/or power. The feedback signal (F) is wirelessly transmitted from the power receiver arrangement (12) to the power transmitter arrangement (11). In the power transmitter arrangement (11) the creation of electric pulses (P) resulting in the transmission of electromagnetic wave pulses (W) is controlled based on the received feedback signal (F).

## Description

The invention refers to a power transmission system and method for wireless power transmission from a power transmitter arrangement to a power receiver arrangement.

Wireless energy transmission is known in general. For example, inductive couplings are known for charging mobile devices by means of a magnetic field. While such applications operate with relatively small absolute power values it is still demanding to realize wireless power transmission for high power applications.

In many facilities used in the power transmission and distribution grid, wiring of systems and devices results in an enormous total cable length, which in turn requires a respective amount of conductive material, such as copper, and insulating material, such as plastic material. In addition, such wiring is time-consuming, for example wiring in a substation or transformer station in order to connect distribution systems of different power levels with each other.

It would be desirable to reduce wiring costs and time in power distribution and transmission installations. This object is solved by means of a power transmission system according to claim 1 and a power transmission method according to claim 12.

The power transmission system according to the present invention comprises a power transmitter arrangement and a power receiver arrangement. The power transmitter arrangement comprises a transmitter antenna array, a control device, and a feedback signal receiver. The control device is connected to the transmitter antenna array. The feedback signal receiver is connected to the control device.

The power receiver arrangement comprises a receiver antenna array, an energy storage, a sensor unit, and a feedback signal transmitter. The sensor unit is connected to the feedback signal transmitter. The energy storage is connected with the receiver antenna array.

On the receiver side, a feedback signal can be produced by means of the sensor unit, which characterizes an electrical parameter of the power receiving arrangement, particularly a parameter that characterizes an amount of required power or energy on the receiver side. The feedback signal transmitter is configured to wirelessly transmit the feedback signal to the feedback signal receiver on the transmitter side. Based on the feedback signal, the control device of the power transmitter arrangement creates a sequence of electric pulses. For example, the electric pulses may be created by switching an electric power on and off with a determined or preset frequency. The electric pulses can be supplied to the transmitter antenna array that in turn transmits respective electromagnetic wave pulses to the receiver antenna array.

The receiver antenna array receives electromagnetic wave pulses corresponding to the electric pulses produced by the power transmitter arrangement and supplies the received electrical power to the energy storage. The receiver antenna array may be configured as a rectifying antenna ("rectenna"). In another embodiment, an individual rectifier can be arranged between the receiver antenna array and the energy storage.

In so doing, any cable connection can be replaced by the power transmission system. The power is transmitted between the power transmitter arrangement and the power receiver arrangement wirelessly. The power transmission system is particularly suitable also for distances in a range of one or more meters (e.g. 50 meters, 100 meters, 250 meters, 500 meters or even more). It can be used in a wide field of applications, where electrical power or energy shall be transmitted. For example, it is advantageous for simplifying wiring and installation in substations or transformer stations and preferably inside buildings thereof.

It is advantageous if the control device of the power transmitter arrangement comprises a switching unit and a control unit. The control unit is configured to control the switching unit. Thereby, it is particularly advantageous if the switching unit is configured to individually connect or disconnect each of the antenna elements of the transmitter antenna array individually to or from a power input where electrical power is provided for the power transmitter arrangement. For example, the switching unit may comprise one controllable switch for each antenna element of the transmitter antenna array.

It is preferred if only a subgroup of the antenna elements of the transmitter antenna array is connected to the power input at each point in time. Accordingly, not all of the antenna elements are transmitted at the same time. A subgroup of the antenna elements used for concurrent transmission can be only one or more than one antenna element.

Preferably, the control device determines a switching scheme for the transmitter antenna array including individual switching schemes for each controllable switch and/or each antenna element. The switching scheme may define at least one of:
- the duration of an electric pulse,
- the pause duration between two subsequent electric pulses, and
- the frequency f_{P} of an electric pulse.
The frequency f_{P} of an electric pulse and/or the frequency of the transmitted electromagnetic waves can be defined depending on the transmission distance between the transmitter antenna array and the receiver antenna array.

The switching scheme for the transmitter antenna array (comprising individual switching schemes for each controllable switch and/or each antenna element) defines the number of electromagnetic wave pulses per unit in time, inter alia, and thus in turn influences the wireless power rating.

The control device may also be configured to determine and/or vary the amplitude of each electric pulse. Optionally, the control device may comprise at least one of a voltage divider circuit, a converter circuit, a rectifier circuit, etc. For example, the control device may use a rectifier circuit and a DC link if necessary or advantageous.

As mentioned above, the feedback signal advantageously characterizes the electrical energy and/or electrical power needed on the receiver side. Preferably, the feedback signal characterizes at least one of:
- a voltage occurring at the energy storage,
- a current flowing into the energy storage,
- a current flowing out of the energy storage,
- an amount of energy stored in the energy storage,
- a currently available storage capacity of the energy storage.

The antenna arrays are configured to use transmission frequencies in a high frequency range (particularly MHz- or GHz-range), e.g. at least 300 MHz or at least 1.0 GHz or in a range of approximately at least 3.0 GHz and preferably approximately 10 GHz maximum.

The maximum transmission distance between the transmitter antenna array and the receiver antenna array can be in a wide range, for example it can be configured for transmission distances at any desired distance up to 500 m or even more. In an embodiment the power transmission system can be used in a substation, particularly an AIS substation, where the transmission distance can be approximately 3000 mm. For example, the maximum transmission distance depends on the transmission frequency, which can be set as necessary for the respective application. Additionally, design parameters such as the antenna design or waveguide design can be adapted as necessary for the respective application.

In order to avoid unauthorized influence, the power transmission system can use encryption methods to protect the power transmission system. Particularly, the feedback signal transmitter is configured to encrypt the feedback signal prior to transmission of the feedback signal to the feedback signal receiver. In this case, the feedback signal receiver is configured to decrypt the received feedback signal. Accordingly, during wireless transmission of the feedback signal, it is encrypted and therefore protected from unauthorized access.

The invention also refers to a power transmission method for wireless power transmission from the power transmitter arrangement to the power receiver arrangement. For carrying out this method, any embodiment of the power transmission system can be used that has been described above.

Advantageous embodiments of the invention can be derived from the dependent claims, the description and the drawings. In the following, advantageous embodiments of the invention are explained in more detail with reference to the drawing. The drawing shows:
Figures 1 and 2, a schematic block diagram illustration of an embodiment of a power transmission system, respectively,
Figure 3, a schematic basic illustration of an electric pulse sequence created on the transmitter side and provided to a transmitter antenna array and
Figure 4, an exemplary schematic illustration of a switching scheme of a control device of the power transmitter arrangement.

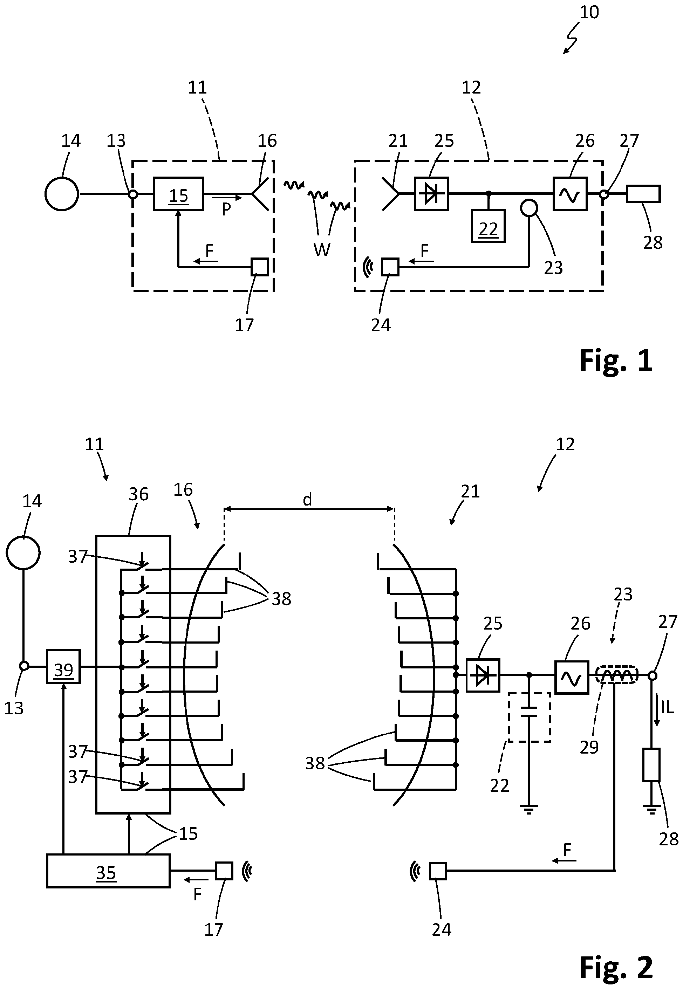

In figures 1 and 2 embodiments of power transmission systems 10 are highly schematically illustrated. The power transmission system 10, comprises a power transmitter arrangement 11 and a power receiver arrangement 12. Electrical power can be transmitted from the power transmitter arrangement 11 to the power receiver arrangement 12.

The power transmitter arrangement comprises a power input 13, to which electrical power can be supplied, for example by connecting a power source 14 to the power input 13. The power source 14 can provide DC or AC power.

A control device 15, is connected to the power input 13 and is configured to produce electric pulses P. The electric pulses P are supplied from the control device 15 to a transmitter antenna array 16. The transmitter antenna array 16 is configured to transmit electromagnetic wave pulses W toward the power receiver arrangement 12.

The control device 15 is configured to determine a pulse sequence PS of electric pulses P to be produced and provided to the transmitter antenna array 16 based on a feedback signal F. The feedback signal F can be received by means of a feedback signal receiver 17 of the power transmitter arrangement 11. The feedback signal receiver 17 may be configured to receive a feedback signal F as wireless signal according to a standard transmission protocol, for example, WiFi standard.

The power receiver arrangement 12 comprises a receiver antenna array 21 configured for receiving the electromagnetic wave pulses W transmitted from the transmitter antenna array 16. The power receiver arrangement 12 further comprises an energy storage 22, a sensor unit 23, and a feedback signal transmitter 24. The energy storage 22 is connected to the receiver antenna array 21, preferably via a rectifier circuit 25. The received electrical energy contained in the electromagnetic wave pulses W is stored in the storage unit 22 and is in this manner accumulated. As required, the power receiver arrangement 12 can also comprise a converter circuit 26 connecting the energy storage with a power output 27 of the power receiver arrangement 12. For example, a load 28 may be connected to the power output 27.

The sensor unit 23 is configured to create the feedback signal F. Preferably the feedback signal F characterizes power or energy required on the receiver side. The sensor unit 23 may be configured to detect one or more electrical parameters and/or determine one or more additional parameters from one or more of the detected parameters. In the embodiment the sensor unit 23 can comprise at least one voltage sensor and/or at least one current sensor. In Figure 2, by way of example, a current sensor 29 is illustrated that can be inductively coupled to an electric line connected with power output 27. The current sensor 29 can be configured to measure a load current IL flowing from the current output 27 to the load 28.

The feedback signal F produced by the sensor unit 23 is wirelessly supplied to the feedback signal transmitter 24 for transmission to the feedback signal receiver 17. Preferably, the feedback signal transmitter 24 is configured to encrypt the feedback signal F prior to transmission of the feedback signal F to the feedback signal receiver 17. The feedback signal receiver 17 can be configured to decrypt the received feedback signal F. In doing so, the feedback signal F is protected from unauthorized access during wireless transmission.

If more than one parameter is measured and/or determined by means of the sensor unit 23, the respective parameter values can be combined in the feedback signal F or can be transmitted sequentially as a sequence of feedback signals F.

The feedback signal F may also characterize at least one of:
- a voltage occurring at the energy storage,
- a current flowing into the energy storage 22,
- a current flowing out of the energy storage 22,
- an amount of energy currently stored in the energy storage 22 and
- a currently available storage capacity of the energy storage 22.

As shown in more detail in figure 2, the control device 15 of the power transmitter arrangement 11 may comprise a control unit 35 and a switching unit 36 containing one or more controllable switches 37. Each controllable switch 37 can be controlled individually by a respective signal provided by the control unit 35. The number of controllable switches 37 of the switching unit 36 may correspond to the number of antenna elements 38 of the transmitter antenna array 16. Preferably, the number of antenna elements 38 of the receiver antenna array 21 corresponds to the number of antenna elements 38 of the transmitter antenna array 16. Preferably, each individual antenna element 38 of the transmitter antenna array 16 is configured to transmit electromagnetic wave pulses W to one of the antenna elements 38 of the receiver antenna array 21.

As an option, the power transmitter arrangement 11 may comprise one or more circuits for modifying the electrical voltage and/or the electrical current provided at power input 13, as schematically illustrated by way of example of input circuit 39 in figure 2. The input circuit 39 can use known circuits, such as a converter, a voltage divider, a rectifier in order to provide a suitable form of electrical power to the switching unit 36, for example, DC voltage having an appropriate amplitude.

As schematically depicted in figure 2, the transmission distance d can be up configured as necessary for the application, in which the system is used, and particularly depending on the configuration of the antenna array 16, 21, and/or the transmission frequency. The transmission frequency can be in a microwave range. For example, the transmission frequency can be in the MHz- or GHz-range.

### The embodiments described so far operate as follows:

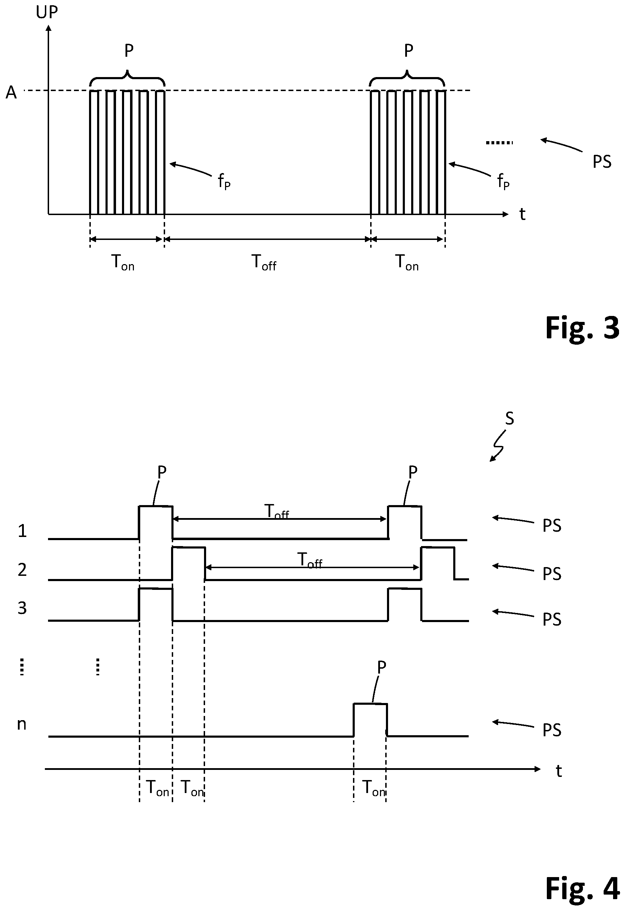

Depending on the received feedback signal F, the control device 15 determines a switching scheme S for switching unit 36, that means for each of the controllable switches 37. The switching scheme S comprises individual switching schemes for each controllable switch 37, which then produces a pulse sequence PS of electric pulses P, as exemplarily illustrated in figure 3. Each electric pulse P has a pulse duration Tₒₙ during which a voltage UP is alternated and according to the example switched on and off. The amplitude A of the electric pulse voltage UP can be in a range from some millivolt up to some volts, for example from 50 mV to 100 V. The amplitude A can be defined as necessary and appropriate for the respective application. During the pulse duration Tₒₙ a duty cycle can be defined arbitrarily. In the example shown in figure 3 the duty cycle during the pulse duration Tₒₙ is 0.5, which is an example only.

The waveform for the electric pulse P can be a square wave, as exemplarily illustrated in figure 3. However, also other waveforms are possible, such as triangular or sawtooth waveforms or sinusoidal waveforms.

Between two subsequent pulses P a pulse sequence PS comprises a pulse pause where the voltage UP is at least approximately zero. The pulse pause has a pause duration T_{off}. The pause duration T_{off} can be longer than, shorter than or equal to the pulse duration Tₒₙ, depending on the desired duty cycle of the sequence of multiple pulses P.

A pulse sequence PS of multiple pulses P can be provided to any of the antenna elements 38 of the transmitter antenna array 16. Only highly schematically and by way of example, a switching scheme S is illustrated in figure 4 showing individual pulse sequences PS with pulses P for some of the antenna elements 38 (antenna element no. 1, 2, 3, ..., n). The pulses P of two or more different antenna elements 38 may be produced in time sequence following directly to one another without delay. However, also a time delay may be provided between two pulses P transmitted by two antenna elements 38 subsequently. In addition or as an alternative, pulses P transmitted by two different antenna elements 38 may be transmitted concurrently or at least partly overlapping in time.

The antenna elements 38 of the transmitter antenna array 16 are numbered with 1, 2, 3, ... , n in the switching scheme S of figure 4. In the switching scheme S the pulse sequences of electric pulses P for each antenna element 38 may be repeated.

It has to be noted that one or more parameters of a pulse sequence PS of pulses P for one or more antenna elements may be varied in operation depending on the feedback signal F. For example, the amplitude A and/or the frequency f_{P} of an electric pulse P can be varied as necessary. Additionally or alternatively, the pulse duration Tₒₙ and/or the pause duration T_{off} can be varied as necessary depending on the feedback signal F.

The pulses P provided to the antenna elements 38 create electromagnetic wave pulses W transmitted from the transmitter antenna array 16, to the receiver antenna array 21. The energy of the received electromagnetic wave pulses W is stored in the energy storage 22 - if applicable after rectification by means of rectifier circuit 25. The energy storage 22 can comprise one or more capacitors for accumulating the electrical energy.

From one or more measured and/or determined parameters a feedback signal F can be produced that characterizes whether the power receiver arrangement 12 requires electrical energy and/or power or not. For example, if the load current IL is high and the energy stored in the energy storage 22 decreases, the feedback signal F may indicate that transmission of electrical energy is required. In turn, if for example the energy storage 22 does not provide any available storage capacity and the load current IL is comparably low or even zero, the feedback signal F may indicate that no transmission of electrical power is necessary.

The invention refers to a wireless power transmission system 10 and method. It comprises a power transmitter arrangement 11 and a power receiver arrangement 12. The power transmitter arrangement 11 is configured to transmit electromagnetic wave pulses W to the power receiver arrangement 12, where the electrical energy can be accumulated and/or stored. The power receiver arrangement 12 is configured to create a feedback signal F for controlling the amount of transmitted electrical energy and/or power. The feedback signal F is wirelessly transmitted from the power receiver arrangement 12 to the power transmitter arrangement 11. In the power transmitter arrangement 11 the creation of electric pulses P resulting in the transmission of electromagnetic wave pulses W is controlled based on the received feedback signal F.

### Reference Signs:

- 10: power transmission system
- 11: power transmitter arrangement
- 12: power receiver arrangement
- 13: power input
- 14: power source
- 15: control device
- 16: transmitter antenna array
- 17: feedback signal receiver

- 21: receiver antenna array
- 22: energy storage
- 23: sensor unit
- 24: feedback signal transmitter
- 25: rectifier circuit
- 26: converter circuit
- 27: power output
- 28: load
- 29: current sensor

- 35: control unit
- 36: switching unit
- 37: controllable switch
- 38: antenna element
- 39: input circuit

- A: amplitude
- d: transmission distance
- F: feedback signal
- f_{P}: frequency of a pulse
- IL: load current
- P: electric pulse
- PS: pulse sequence of electric pulses
- S: switching scheme
- Tₒₙ: pulse duration
- T_{off}: pause duration
- UP: electric pulse voltage
- W: electromagnetic wave pulse

## Claims

1. Power transmission system (10) for wireless power transmission comprising a power transmitter arrangement (11) and a power receiver arrangement (12),
wherein the power transmitter arrangement (11) comprises a transmitter antenna array (16), a control device (15) and a feedback signal receiver (17) connected to the control device (15) and configured to receive and supply a feedback signal (F) to the control device (15),
wherein the control device (15) is configured to create a sequence of electric pulses (P) based on the feedback signal (F) and to provide the sequence of electric pulses (P) to the transmitter antenna array (16) for transmission of electromagnetic wave pulses (W) corresponding to the electric pulses (P),
wherein the power receiver arrangement (12) comprises a receiver antenna array (21), an energy storage (22) connected thereto, a sensor unit (23) and a feedback signal transmitter (24) connected to the sensor unit (23),
wherein the receiver antenna array (21) is configured to receive transmitted electromagnetic wave pulses (W) and the power receiver arrangement (12) is configured to accumulate the received electrical power to the energy storage (22),
wherein the sensor unit (23) is configured to create a feedback signal (F) characterizing an electrical parameter of the power receiver arrangement (12),
wherein the feedback signal transmitter (24) is configured for wireless transmission of the feedback signal (F) to the feedback signal receiver (17).

2. Power transmission system according to claim 1, wherein the control device (15) comprises a switching unit (36) and a control unit (35) configured to control the switching unit (36), such that antenna elements (38) of the transmitter antenna array (16) are individually connected to or disconnected from a power input (13) for supply of electrical power.

3. Power transmission system according to claim 2, wherein only a subgroup of the antenna elements (38) of the transmitter antenna array (16) is connected to the power input (13) at each point in time.

4. Power transmission system according to claim 2 or 3, wherein each of the antenna elements (38) of the transmitter antenna array (16) is connected to and disconnected from the power input (13) according to a switching scheme (S).

5. Power transmission system according to claim 4, wherein the switching scheme (S) defines at least one of
- the duration of the electric pulse (Tₒₙ),
- the pause duration (T_{off}) between subsequent electric pulses (P),
- the frequency (f_{P}) of an electric pulse (P).

6. Power transmission system according to any of the preceding claims, wherein the feedback signal (F) characterizes an electrical energy and/or power requirement of the power receiver arrangement (12).

7. Power transmission system according to any of the preceding claims, wherein the feedback signal (F) characterizes at least one of:
- a voltage occurring at the energy storage (22),
- a current flowing into the energy storage (22),
- a current flowing out of the energy storage (22),
- a load current flowing out of the power receiver arrangement (12) toward a load (28),
- an amount of energy currently stored in the energy storage (22),
- a currently available storage capacity of the energy storage (22).

8. Power transmission system according to any of the preceding claims, wherein the transmitter antenna array (16) and/ or the receiver antenna array (21) is/are configured to operate with a transmission frequency in the MHz- or GHz-range, preferably minimum 300 MHz or preferably minimum 1.0 GHz or preferably minimum 3.0 GHz and/or preferably maximum 10 GHz.

9. Power transmission system according to any of the preceding claims, wherein the transmission distance (d) between the transmitter antenna array (16) and the receiver antenna array (21) is maximum 500 m or maximum 250 m or maximum 100 m or maximum 50 m.

10. Power transmission system according to any of the preceding claims, wherein the feedback signal transmitter (24) is configured to encrypt the feedback signal (F) prior to wireless transmission.

11. Power transmission system according to any of the preceding claims, wherein the feedback signal receiver (17) is configured to decrypt the received feedback signal (F).

12. Power transmission method for wireless power transmission from a power transmitter arrangement (11) to a power receiver arrangement (12),
wherein the power transmitter arrangement (11) comprises a transmitter antenna array (16), a control device (15) and a feedback signal receiver (17) connected to the control device (15),
wherein the power receiver arrangement (12) comprises a receiver antenna array (21), an energy storage (22) connected thereto, a sensor unit (23) and a feedback signal transmitter (24) connected to the sensor unit (23), and
wherein the method comprises:
- creating a feedback signal (F) characterizing an electrical parameter of the power receiver arrangement (12) by means of the sensor unit (23) and wirelessly transmitting the feedback signal (F) to the feedback signal receiver (17),
- creating a sequence of electric pulses (P) based on the feedback signal (F) by means of the control device (15) and providing the sequence of electric pulses (P) to the transmitter antenna array (16) for transmission of electromagnetic wave pulses (W) corresponding to the electric pulses (P),
- receiving electromagnetic wave pulses (W) by means of the receiver antenna array () and accumulating the received electrical power in the energy storage (22) .
